# EUROPÄISCHE PATENTSCHRIFT

(11) **EP 2 574 751 B1**
(45) Veröffentlichungstag und Bekanntmachung des Hinweises auf die Patenterteilung: **29.11.2017**
(21) Anmeldenummer: 12006684.0
(22) Anmeldetag: 25.09.2012
(51) Int. Cl.: F01N 3/32, F01N 3/30, F01N 13/08, F01N 13/18, B60K 11/06, B60K 13/04, F01N 3/28

(54) **Abgasführung für eine Strassenfräse**
Exhaust gas conduit for a highway milling machine
Conduit de gaz d'échappement pour une fraiseuse à froid pour asphalte

(30) Priorität: 30.09.2011 DE 102011114709
(43) Veröffentlichungstag der Anmeldung: 03.04.2013
(73) Patentinhaber: BOMAG GmbH, 56154 Boppard (DE)
(72) Erfinder: Lubischer, Bernd, 56154 Boppard (DE); Lang, Markus, 55469 Pleizenhausen (DE); Starkmeth, Moritz, 56072 Koblenz (DE)
(74) Vertreter: Heidler, Philipp

(56) Entgegenhaltungen:
- EP-A1- 1 637 710
- JP-U- S61 105 229
- US-A1- 2008 115 989

## Beschreibung

Die Erfindung betrifft eine Abgasführung für eine Straßenfräse, insbesondere für eine selbstfahrende Straßenfräse, wie insbesondere eine Kompaktfräse. Eine derartige Straßenfräse umfasst einen Verbrennungsmotor, einen Motorlufteinlass, über den Motorluft von außen zum Verbrennungsmotor hin strömt, einen Motorluftauslass, über den die Motorluft aus der Straßenfräse herausgeleitet wird, eine Einrichtung zur Erzeugung einer Strömungsbewegung der Motorluft vom Motorlufteinlass zum Motorluftauslass und einen zur Abführung der im Betrieb des Verbrennungsmotors entstehenden Abgase vom Verbrennungsmotor aus der Straßenfräse heraus ausgebildeten Abgasstrang mit einem Abgasauslass.

Gattungsgemäße Straßenfräsen umfassen einen Verbrennungsmotor, über den beispielsweise die für den Betrieb der Fräswalze und/oder den Fahrantrieb benötigte Leistung zur Verfügung gestellt wird. Der grundsätzliche Aufbau einer gattungsgemäßen Straßenfräse ist beispielsweise in der DE 10 2010 014 529 A1, auf die hiermit Bezug genommen wird, offenbart. Die Abführung der bei der Verbrennung von Treibstoff durch den Verbrennungsmotor entstehenden Abgase stellt die Hersteller von Straßenfräsen gleich vor mehrere Probleme. Einerseits soll die Abgasableitung aus der Straßenfräse idealerweise derart erfolgen, dass die Straßenfräse betreibende und in der Nähe der Straßenfräse befindliche Personen möglichst wenig belastet werden. Dies ist insofern häufig nicht einfach, da die Abgase neben der reinen Schadstoffbelastung häufig sehr hohe Temperaturen (bis zu 300 °C) aufweisen. Gleichzeitig soll durch die austretenden Abgase möglichst kein Staub vom Boden aufgewirbelt werden und die Erhitzung anderer Bauteile durch das Abgas möglichst vermieden werden. Daneben treten häufig an der Austrittstelle der Abgase aus der Straßenfräse nicht unerhebliche Verrußungen auf, die insbesondere aus ästhetischen Gesichtspunkten nachteilig sind. Unabhängig von den vorstehenden Faktoren stellt es ferner in der Konstruktion von Straßenfräsen aufgrund des üblicherweise nur sehr begrenzt verfügbaren Bauraums eine besondere Herausforderung dar, die Abgasführung möglichst platzsparend in der Straßenfräse unterzubringen.

Im Stand der Technik sind beispielsweise Straßenfräsen bekannt, die ein nach oben abstehendes Abgasrohr aufweisen. Diese Art der Abgasführung hat den Vorteil, dass die Abgase in einer Höhe aus der Straßenfräse austreten, die üblicherweise oberhalb der in der Nähe der Straßenfräse befindlichen Personen ist. Eine derartige Abgasführung ist allerdings in solchen Situationen unvorteilhaft, in denen die Straßenfräse eine möglichst kompakte Gesamterscheinung aufweisen soll. Alternativ werden Abgase häufig über ein unterhalb der Straßenfräse angeordnetes Abgasrohr zum Boden hin abgeleitet. Dies führt jedoch zu einer unerwünschten Aufwirbelung von Staub vom Boden. Alternativ ist es bei solchen Straßenfräsen ferner bekannt, die Abgase in einen Radkasten der Straßenfräse abzuleiten. Dadurch tritt allerdings eine verstärkte Erhitzung des Radkastens auf, was insbesondere bei der Verwendung von Gummirädern problematisch ist. Von einer Ableitung der Abgase zur Seite der Straßenfräse wird häufig Abstand genommen, da die dabei auftretenden Rußspuren auf dem Lack der Straßenfräse und die durch die heißen Abgase bestehende Gefährdung von sich neben der Straßenfräse aufhaltenden Personen, was häufig beispielsweise im Arbeitsbetrieb der Straßenfräse der Fall ist, als nachteilig empfunden wird.

Dokument US 2008/0115989 A offenbart einen Bus dessen Endbereich eines Abgasstrangs im Wesentlichen bündig zur Außenwand ist, und Abgase zu Kühlungszwecken mit Motorluft durchmischt werden, um die Abgastemperatur in unmittelbarer Fahrzeugnähe zu begrenzen.

Die Aufgabe der Erfindung liegt nun darin, eine Abgasführung für eine Straßenfräse, insbesondere einer selbstfahrenden Fräsvorrichtung, anzugeben, die die vorstehenden Nachteile nicht aufweist.

Die Lösung der Aufgabe gelingt mit einer Straßenfräse und einem Verfahren gemäß den unabhängigen Ansprüchen. Bevorzugte Weiterbildungen sind in den abhängigen Ansprüchen angegeben.

Der wesentliche Grundgedanke der Erfindung liegt darin, den Abgasstrang der Straßenfräse in der Weise auszubilden und anzuordnen, dass die Motorluft wenigstens den Endbereich des Abgasstrangs zumindest teilweise umströmt und ein in ein Rohr des Abgasstrangs integriertes und vom Abgas angeströmtes Hindernis im Bereich des Abgasauslasses als Verwirbelungseinrichtung vorgesehen ist. Eine gattungsgemäße Straßenfräse umfasst neben dem Verbrennungsmotor einen Motorlufteinlass, über den Motorluft von außen zum Verbrennungsmotor hin strömt. Motorluft bezeichnet somit durch den Motorlufteinlass von außerhalb der Straßenfräse in die Straßenfräse eintretende Umgebungsluft. Bei dem Motorlufteinlass muss es sich dabei nicht zwangsläufig um eine einzelnen Einlassöffnung für Motorluft handeln. Die Motorluft kann auch über mehrere verschiedene Durchtrittsöffnungen und/oder Kanäle zum Verbrennungsmotor (beziehungsweise in den den Verbrennungsmotor umgebenden Motorraum) gelangen. Auch mehrere verschiedene Möglichkeiten, wie Umgebungsluft in die Straßenfräse eintreten kann, werden vorliegend in ihrer Gesamtheit als Motorlufteinlass bezeichnet. Ergänzend zum Motorlufteinlass ist ferner ein Motorluftauslass vorhanden, über den die Motorluft aus der Straßenfräse herausgeleitet wird. Die Motorluft wird in der Straßenfräse somit vom Motorlufteinlass zum Motorluftauslass geleitet. Diejenigen Elemente, über die baulich die Führung der Motorluft vom Motorlufteinlass zum Motorluftauslass erreicht wird, werden insgesamt als Motorluftführung bezeichnet. Die Motorluftführung kann somit beispielsweise Wandelemente, Schlauchelemente, etc. umfassen. Dabei passiert die Motorluft auf ihrem Weg zwischen dem Motorlufteinlass und dem Motorluftauslass zumindest teilweise den Verbrennungsmotor und strömt wenigstens in einem Teilbereich an diesem entlang, so dass durch die Motorluftströmung in der Straßenfräse eine Luftkühlung des Motors erreicht wird.

Damit die Motorluft gezielt vom Motorlufteinlass zum Motorluftauslass durch die Motorluftführung strömt, ist ferner eine Einrichtung zur Erzeugung einer Strömungsbewegung der Motorluft in der Motorluftführung vorhanden. Diese Einrichtung ist somit dafür verantwortlich, dass Motorluft von außen über den Motorlufteinlass angesaugt und über den Motorluftauslass abgeleitet wird, beziehungsweise dafür, dass die Motorluft orientiert vom Motorlufteinlass zum Motorluftauslass strömt. Dabei kann es sich insbesondere um ein Kühlgebläse handeln, über das im Bereich zwischen Motorlufteinlass und Motorluftauslass Umgebungsluft von außerhalb der Straßenfräse angesaugt wird. Die Motorluft bezeichnet dabei eine Luftströmung, die zu wesentlichen Teilen gerade nicht für die Verbrennung von Treibstoff durch den Verbrennungsmotor benötigt wird. Diese Luft wird als Verbrennungsluft bezeichnet und kann beispielsweise über eine separate Luftströmung dem Verbrennungsmotor zugeführt werden. Die Einrichtung zur Erzeugung einer Strömungsbewegung der Motorluft führt ferner in solchen Fällen, in denen der Verbrennungsmotor in einem Motorraum angeordnet ist, dazu, dass im Motorraum gegenüber der Außenumgebung der Straßenfräse ein Überdruck herrscht und die Motorluft dadurch aus dem Motorluftauslass gepresst wird.

Die Straßenfräse weist schließlich einen Abgasstrang auf, der zur Abführung der im Betrieb des Verbrennungsmotors entstehenden Abgase vom Verbrennungsmotor aus der Straßenfräse heraus ausgebildet ist. Der Abgasstrang ist dazu beispielsweise an den Motorblock angeschlossen und führt vom Motorblock ausgehend aus der Straßenfräse heraus. Neben Rohrleitungen kann der Abgasstrang ergänzend beispielsweise Partikelfilterstufen, Katalysatorstufen, Schalldämpfer und/oder weitere zwischengeschaltete Stufen zur Abgasbehandlung umfassen.

Der wesentliche Grundgedanke der Erfindung liegt nun darin, dass der Abgasstrang in der Weise angeordnet ist, dass er wenigstens in seinem Endbereich zumindest teilweise von der Motorluft umströmt wird. Die Motorluft wird somit in der Straßenfräse erfindungsgemäß vom Motorlufteinlass zum Motorluftauslass in der Weise geleitet, dass sie wenigstens über den Endbereich des Abgasstrangs streicht. Die vom Verbrennungsmotor kommende Motorluft hat üblicherweise eine Temperatur im Bereich von ungefähr 50 °C. Die im Abgasstrang geleiteten Abgase sind im Vergleich dazu wesentlich heißer und weisen Temperaturen im Bereich von 300 °C und mehr auf. Durch das Umströmen wenigstens des Endbereichs des Abgasstrangs durch Motorluft wird eine Kühlung des Abgases herbeigeführt, so dass die aus der Straßenfräse über den Abgasauslass austretenden Abgase wesentlich kühler und damit für neben der Straßenfräse befindliche Passanten ungefährlicher sind. Der Endbereich des Abgasstrangs bezeichnet dabei nicht zwangsläufig den den Abgasauslass umfassenden Teil des Abgasstrangs, wobei dies bevorzugt der Fall ist. Mit Endbereich wird vielmehr das in Bezug auf die gesamte Länge das Abgasstrangs hintere Drittel des Abgasstrangs bezeichnet. Dies bedeutet, dass die Motorluft zumindest einen Teilbereich des hinteren Drittels des Abgasstrangs, vorzugsweise einen Bereich umfassend den Abgasauslass, zu Kühlungszwecken umströmt. Ein Umströmen des Abgasstrangs liegt dann vor, wenn die vom Motorlufteinlass zum Motorluftauslass geleitete Motorluft zumindest in einem Teilbereich mit dem Abgasstrang in Berührung kommt und an diesem entlang strömt. Der Vorteil der Erfindung liegt darin, dass das Abgas kurz vor dem Austritt aus dem Abgasstrang gezielt gekühlt wird, was durch die Verlagerung des Abgasstrangs im Bereich des hinteren Drittels in die Motorluftströmung erreicht wird. Umströmen ist somit nicht in einschränkender Weise dahingehend auszulegen, dass die Motorluft den Abgasstrang rundherum umspülen muss, es reicht vielmehr ein Entlangströmen in einem Teilbereich aus.

Der Bereich der Straßenfräse, in dem die Motorluft vom Motorlufteinlass zum Motorluftauslass durch die Straßenfräse geleitet wird, wird als Motorluftführung bezeichnet. Teil der Motorluftführung kann dabei insbesondere der Motorraum sein, in dem der Verbrennungsmotor der Straßenfräse angeordnet ist. Der Motorraum ist häufig von entsprechenden Wandelementen umgeben, die in ihrer Gesamtheit einen definierten Innenraum bezeichnen. Erfindungsgemäß ist es nun in einer bevorzugten Ausführungsform vorgesehen, dass neben dem Motorraum ein sich strömungstechnisch daran anschließender Ableitraum vorhanden ist, durch den die Motorluft vom Verbrennungsmotor kommend zum Motorluftauslass strömt. Der Ableitraum stellt somit ein eigenständiges Kompartiment dar, welches in Strömungsrichtung der Motorluft hinter dem Motorraum liegend angeordnet ist. Dazu ist beispielsweise ein entsprechendes Verbindungselement, wie eine Durchgangsöffnung, vorhanden, durch die die Motorluft vom Motorraum in den Ableitraum einströmen kann. Der Ableitraum weist vorzugsweise ferner den Motorluftauslass auf und ragt somit bis an ein Wandelement der Straßenfräse heran. Bevorzugt ist es nun vorgesehen, dass der Abgasstrang mit einem Teilbereich, insbesondere mit einem Krümmer, durch den Ableitraum hindurchgeführt ist. Der Ableitraum wird bei dieser Ausführungsform somit als Kompartiment zur Zusammenführung von strömender Motorluft und wenigstens eines Teils des Endbereiches des Abgasstranges zu Kühlungszwecken genutzt. Damit gelingt einerseits eine räumliche Trennung zwischen Motorraum und Ableitraum. Andererseits ist mit dem Ableitraum eine gewisse Kanalisierung der Motorluft möglich, wodurch beispielsweise die Strömungsgeschwindigkeit der Motorluft gesteigert und der Kühleffekt des Abgases entsprechend verbessert werden kann.

Es hat sich gezeigt, dass die Motorluft neben der Kühlung des Abgases auch zur aktiven Verdünnung des Abgases herangezogen werden kann. Dies ist insofern von Vorteil, als dass dadurch die Abgasbelastung bei der Straßenfräse befindlicher Personen im Idealfall gesenkt werden kann und durch eine Durchmischung von Abgas und Motorluft gleichzeitig der Kühleffekt der Motorluft auf das Abgas im Vergleich zu der vorstehenden Kühlung durch Umspülung des Endbereiches des Abgasstrangs mit Motorluft noch erheblich gesteigert werden kann. Der Motorluftauslass und der Abgasauslass sind daher bevorzugt in der Weise zueinander angeordnet, dass eine Durchmischung des Abgases mit Motorluft, insbesondere beim Austritt aus der Straßenfräse, erfolgt. Dazu ist es, auch wenn diese Variante bevorzugt ist, nicht zwingend vorgesehen, dass vor dem Austritt des Abgases ein Umspülen wenigstens eines Teilbereiches des Abgasstranges mit Motorluft stattfindet. Es sind durchaus auch Varianten denkbar und von der Erfindung mit umfasst, bei denen eine Kühlung des Abgases ausschließlich durch ein Vermischen mit Motorluft erfolgt. Dieser Gedanke der Erfindung sieht somit eine gezielte Zusammenführung von Abgas und Motorluft zur Verdünnung und Kühlung des Abgases vor.

Zur Vermeidung von Verrußungserscheinungen an der Straßenfräse, insbesondere an der Außenoberfläche der Straßenfräse, hat es sich als vorteilhaft erwiesen, wenn die Durchmischung des Abgases mit Motorluft beim Austritt aus der Straßenfräse erreicht wird. Die Besonderheit dieser Ausführungsform liegt darin, dass Motorluft und Abgas voneinander getrennt bis zur Außenwand der Straßenfräse geführt werden. Abgas und Motorluft treten bei dieser Ausführungsform nahezu auf gleicher Höhe aus der Straßenfräse aus und zwar in einer Weise, dass sie sich außerhalb der Straßenfräse vermischen, idealerweise unmittelbar nach dem Austritt aus der Straßenfräse in die Außenumgebung. Dies gelingt beispielsweise dann, wenn der Motorluftauslass und der Abgasauslass in unmittelbarer Nähe zueinander oder sogar aneinander angrenzend ausgebildet und in der Straßenfräse angeordnet sind. Ideal ist es, wenn der Abgasauslass vom Motorluftauslass oder umgekehrt zumindest teilweise und insbesondere vollständig umgeben ist. Der Abgasauslass ist mit anderen Worten beispielsweise innerhalb des Motorluftauslasses angeordnet beziehungsweise beide Auslasseinrichtungen sind zusammengelegt. Bei dieser Ausführungsform erfolgt somit, beispielsweise bei einer ringförmigen Ausbildung des Abgasauslasses und des Motorluftauslasses, ein zentrisches Abgeben des Abgases und ein ringförmig um den Abgasstrom herum verlaufendes Auslassen der Motorluft aus der Straßenfräse. Dadurch, dass Abgas bei dieser Ausführungsform quasi beim Austritt aus der Straßenfräse von Motorluft schlauchartig ummantelt ist, ergibt sich anschließend eine besonders effektive Durchmischung, insbesondere bereits wenige Millimeter neben der Außenoberfläche der Straßenfräse.

Erfindungsgemäß ist der Motorluftauslass in einer Außenwand und insbesondere in einer Seitenwand der Straßenfräse angeordnet. Als Seitenwand wird dabei eine sich in Arbeitsrichtung bzw. Vorwärtsfahrtrichtung der Straßenfräse verlaufende Wandung der Straßenfräse bezeichnet. Ideal ist dabei, wenn die Außenwand, insbesondere Seitenwand, Teil des Maschinenrahmens der Straßenfräse ist. Der Maschinenrahmen der Straßenfräse ist das tragende Element für die einzelnen Aufbauten und/oder Arbeitswerkzeuge, beispielsweise auch für das Fahrwerk. Die Integration des Motorluftauslasses in eine Seitenwand ist insofern besonders vorteilhaft, als dass dadurch eine Ableitung des Abgases zur Außenseite der Straßenfräse hin möglich ist und keine Ableitung nach unten oder in beziehungsweise entgegen der Arbeitsrichtung der Straßenfräse. Damit kann insbesondere auf raumgreifende, nach oben gerichtete Abgasrohre verzichtet werden und auch eine Ableitung des Abgases in einen Radkasten ist nicht mehr erforderlich.

Abgasauslass und Motorauslass schließen erfindungsgemäß im wesentlichen bündig und ganz besonders bündig mit der Außenwand, insbesondere der Seitenwand, der Straßenfräse ab. Im wesentlichen bündig ist dabei bevorzugt so zu verstehen, dass der Abgasauslass und/oder der Motorluftauslass maximal um den halben Rohrdurchmesser des Abgasauslassrohrs über die Oberfläche der angrenzenden Außenwand nach außen vorstehen. Dieser Bereich zwischen maximalem Überstand und bündigem Abschluss hat sich im praktischen Einsatz als optimal erwiesen. Alternativ kann der Abgasauslass und/oder der Motorluftauslass auch leicht gegenüber der Außenoberfläche der Außenwand, insbesondere der Seitenwand, zur Straßenfräse hin beziehungsweise in das Maschineninnere hinein versetzt sein, so dass sozusagen die Außenwand gegenüber dem Motorluftauslass und/oder dem Abgasauslass vorsteht. Auch diese Variante ist von der Bezeichnung "im wesentlichen bündig abschließen" mit umfasst, solange der Abgasauslass und/oder der Motorluftauslass maximal um den halben Rohrdurchmesser von der Außenoberfläche der Außenwand, insbesondere Seitenwand, ins Maschineninnere versetzt sind. Der Begriff Rohrdurchmesser betrifft den Schnittkreisdurchmesser bei der Verwendung im Querschnitt kreisförmiger Abgasrohre. Bei der Verwendung von nichtkreisförmigen Rohren bezieht sich die Angabe "Rohrdurchmesser" auf den jeweils größten Abstand zweier einander gegenüberliegender Punkte auf einer durch den Rohrquerschnitt verlaufenden Geraden. Insgesamt umfasst die Bezeichnung "im wesentlichen bündig" somit den Bereich einer Beabstandung des Abgasauslasses und/oder des Motorluftauslasses zur Außenwand, insbesondere Seitenwand, von einem Überstand von maximal einem halben Rohrdurchmesser bis zu einem Rückversatz ins Maschineninnere von maximal einem halben Rohrdurchmesser, wobei sich die Abstandsangabe auf den Abstand senkrecht zur Außenoberfläche der angrenzenden Außenwand, insbesondere Seitenwand, bezieht. Besonders bevorzugt ist es, wenn der Abgasauslass und/oder der Motorluftauslass genau bündig mit der Außenwand, insbesondere der Außenoberfläche der Außenwand, abschließen. Auf diese Weise wird einerseits sichergestellt, dass das Vorstehen eines Teils des Abgasstranges verhindert wird und die Maschine dadurch eine gegebenenfalls vorhandene Gesamterscheinung beibehalten kann. Andererseits treten Abgas und Motorluft bei dieser Ausführungsform auf gleicher Höhe über der Außenoberfläche der Außenwand, insbesondere Seitenwand, aus der Straßenfräse und können sich direkt an die Straßenfräse nach außen anschließend miteinander vermischen. Auf diese Weise kann beispielsweise ganz besonders effektiv Verrußungserscheinungen an der Oberfläche der Straßenfräse vorgebeugt werden.

Grundsätzlich gelingt eine Vermischung von Abgas und Motorluft bereits durch die Anordnung des Abgasauslasses und des Motorluftauslasses nebeneinander oder gar in einander überlappender Weise. Erfindungsgemäss ist eine Verwirbelungseinrichtung vorgesehen, die dafür Sorge trägt, dass die aus dem Motorluftauslass ausströmende Motorluft und/oder das aus dem Abgasauslass austretende Abgas im Austrittsbereich aktiv miteinander verwirbelt und damit ganz besonders effizient miteinander vermischt werden. Insbesondere das Abgas, welches üblicherweise durch ein Abgasrohr aus der Straßenfräse herausgeleitet wird, weist nahezu laminare Strömungseigenschaften im Abgasrohr und im Bereich des Abgasauslasses auf. Die Verwirbelungseinrichtung ermöglicht nun, die ankommende nahezu laminare Strömung des Abgases (und/oder der Motorluft) in eine nicht laminare, insbesondere turbulente, Strömung zu verwirbeln. Gleiches gilt grundsätzlich auch für die aus dem Motorluftauslass austretende Motorluft. So kann beispielsweise ergänzend oder alternativ auch im Motorauslass eine solche Verwirbelungseinrichtung angeordnet werden. Mit Hilfe der Verwirbelungseinrichtung gelingt es, den Vermischungsprozess zwischen Abgas und Motorluft wesentlich zu verbessern und dadurch beispielsweise eine besonders schnelle Abkühlung und Verdünnung des Abgases zu erreichen. Im Fall, dass Abgas und Motorluft erst über der Außenoberfläche der Straßenfräse miteinander vermischt werden, ist das Gefährdungspotential durch heiße Abgase beispielsweise extrem gering, da aufgrund der durch die Verwirbelungseinrichtung forcierten Durchmischung von Abgas und Motorluft bereits wenige Millimeter nach dem Abgasauslass ungefährliche Abgastemperaturen erreicht werden. Dies ermöglicht eine Anordnung des Abgasauslasses im Bereich der Seitenwand, ohne dass zusätzliche Vorkehrungen getroffen werden, die ein Annähern von umstehenden Personen an den Bereich des Abgasauslasses verhindern.

Erfindungsgemäss ist vorgesehen, dass die Verwirbelungseinrichtung in ein Rohr des Abgasstrangs integriert ist und ein vom Abgas angeströmtes Strömungshindernis, im Bereich des Abgasauslasses des Rohres, darstellt. Ein solches Strömungshindernis hat letztendlich zur Folge, dass die Abgasströmung relativ zu ihrer Anströmrichtung umgelenkt wird, je nach Ausführungsformgleichmäßig oder turbulent. Damit ist kein gradliniges und gleichförmiges Überströmen des Hindernisses mehr möglich, so dass das Entstehen laminarer Strömungsverhältnisse hinter der Verwirbelungseinrichtung ausgeschlossen ist.

Ein solches Strömungshindernis kann beispielsweise konkret ein in das Abgasrohr hineinragender Abschnitt, insbesondere Randabschnitt, des Abgasrohr sein. Hierzu kann beispielsweise eine nahezu keilförmige Delle in den Rand des Abgasrohres eingeschlagen werden, so dass sich ein Teilbereich des Innenmantels des Abgasrohres in das Rohr hinein verbiegt. Ergänzend oder alternativ können aber auch separate Mittel in das Abgasrohr eingebracht werden, wie beispielsweise ein gegenüber der Anströmrichtung des Abgases schräg stehendes Leitblech oder vergleichbare Verwirbelungskörper. Insbesondere mit einem solchen Leitblech ist es ferner möglich, dem verwirbelten Abgas in Form eines Abgaswirbels eine bestimmte Orientierung beziehungsweise einen Drall zu geben, beispielsweise kreisförmig von der Straßenfräse weg. Bei dieser Ausführungsform ist die Verwirbelungseinrichtung somit in der Weise ausgebildet, dass sie die Abgasströmung in eine bevorzugte Richtung von der Straßenfräse weg, beispielsweise zur Seite nach schräg unten, verwirbelt. Mit Hilfe dieser Einrichtung gelingt es besonders gut, Verrußungserscheinungen an der Straßenfräse zu verhindern.

In Abhängigkeit von der konkreten Ausbildung der Straßenfräse kann es erforderlich sein, die bestehende Motorluftströmung zusätzlich zu unterstützen und/oder zu verstärken. Neben der standardmäßig vorhandenen Einrichtung zur Erzeugung einer Strömungsbewegung der Motorluft, beispielsweise Kühlergebläse, kann daher ein Zusatzgebläse vorhanden sein, mit dem Luft zum Motorauslass gefördert wird. Die konkrete Anordnung dieses Zusatzgebläses kann variieren. Einerseits kann das Zusatzgebläse in den bestehenden Strömungsweg der Motorluft von dem Motorlufteinlass zum Motorluftauslass integriert werden und somit eine Verstärkung der bestehenden Strömung der Motorluft herbeiführen. Ergänzend oder alternativ kann das Zusatzgebläse allerdings auch dafür sorgen, dass Luft von anderer Stelle angesaugt und ergänzend in den Motorluftstrom und/oder in den Durchmischungsbereich zwischen Motorluft und Abgas eingespeist wird. Das Zusatzgebläse kann ferner in der Weise in die Straßenfräse integriert sein, dass eine Aktivierung des Zusatzgebläses in Abhängigkeit von dem Über- oder Unterschreiten eines festgelegten Schwellenwertes eines Betriebsparameters, beispielsweise der Motorleistung des Verbrennungsmotors, etc., abhängt. Auf diese Weise ist es möglich, dass das Zusatzgebläse nur im Bedarfsfall aktiviert wird und nicht durchgehend betrieben werden muss. Besonders bevorzugt ist das Zusatzgebläse im Bereich des Ableitraums angeordnet.

Die vorliegende Erfindung ist grundsätzlich auf ein breites Spektrum an Straßenfräsen übertragbar. Die Vorteile der Erfindung treten dabei besonders deutlich bei Straßenwalzen und Straßenfräsen, kompakten Straßenfräsen, wie ganz besonders Kompaktfräsen, hervor. Diese Straßenfräsen werden häufig in beengten räumlichen Verhältnissen eingesetzt, so dass raumgreifende Auspuffelemente des Abgasstrangs generell als nachteilig empfunden werden. Durch die kompakte Gesamterscheinung dieser Straßenfräsen ist der für den Abgasstrang verfügbare Bauraum äußerst begrenzt. Die grundsätzliche Möglichkeit, das Abgas zur Seite der Straßenfräse abzuleiten, ist daher insofern besonders vorteilhaft, als dass der erforderliche Bauraum für diese Art der Abgasableitung vergleichsweise gering ist. So ist weder eine Abführung des Abgases in den Front- oder Rückbereich der Straßenfräse noch die Integration von der Maschine abstehender Abgaselemente erforderlich.

Speziell bei Straßenfräsen hat sich die Ausbildung der Straßenfräse mit einer sogenannten Nullseite als besonders bevorzugt erwiesen. Auf der Nullseite der Straßenfräse reicht der quer zur Arbeitsrichtung an der Fräsvorrichtung angeordnete Fräsrotor bis an die Außenwand der Straßenfräse heran. In diesem Bereich hat sich nun die Verwendung eines Schwenkrades etabliert, welches von einer ausgeschwenkten und auf Höhe des Fräsrotors befindlichen Position für kantennahe Arbeiten in eine eingeschwenkte und in Arbeitsrichtung vor den Fräsrotor liegende Position verschwenkt werden kann. Auf dieser Nullseite fährt die Fräsvorrichtung häufig nah an Wandbereichen, beispielsweise Hauswänden, vorbei. Um ein unmittelbares Anblasen dieser Wandbereiche mit Abgas zu verhindern, hat sich die Anordnung des Abgasauslasses und des Motorluftauslasses auf der der Nullseite gegenüberliegenden Seite der Straßenfräse als besonders bevorzugt erwiesen.

In einem weiteren Aspekt gelingt die Lösung der Aufgabe durch ein Verfahren zur Abgasführung einer Straßenfräse, umfassend die Schritte Ableiten des Abgases vom Verbrennungsmotor zum Abgasauslass und Führen der Motorluft zum Motorluftauslass und Kühlen des Abgases mit Motorluft durch Durchmischen des Abgases mit Motorluft im Bereich des Abgasauslasses und des Motorluftauslasses. Das Durchmischen des Abgases mit Motorluft erfolgt dabei unmittelbar hinter dem Abgasauslass und dem Motorluftauslass, auf Höhe der Außenoberfläche der Straßenfräse. Das Durchmischen des Abgases mit der Motorluft gelingt verfahrensgemäß durch ein Verwirbeln des Abgases mit einer im Abgasauslass ausgebildeten Verwirbelungseinrichtung besonders effektiv. Dadurch wird der Durchmischungsvorgang von Motorluft und Abgas sozusagen aktiv unterstützt, wodurch besonders zuverlässige Konservierungsergebnisse erhalten werden. Das Durchmischen und das Verwirbeln von Abgas und Motorluft miteinander erfolgt dabei außerhalb der Straßenfräse, um Verrußungserscheinungen effektiv vorzubeugen.

Nachstehend wird die Erfindung anhand der in den Figuren angegebenen Ausführungsbeispiele näher beschrieben. Es zeigen schematisch:
- Fig. 1: Seitenansicht auf eine Straßenfräse;
- Fig. 2: Draufsicht auf einen Horizontalschnitt durch die Straßenfräse aus Figur 1;
- Fig. 3: Ausschnittsvergrößerung des Teilbereichs mit Abgasauslass und Motorluftauslass aus Figur 1;
- Fig. 4: Ausschnittsvergrößerung des Endbereichs des Abgasstrangs mit Motorluftauslass und Abgasauslass aus der Schnittfigur aus Figur 2;
- Fig. 5: alternative Ausbildung einer Verwirbelungseinrichtung in der Ausschnittsvergrößerung aus Figur 4; und
- Fig. 6a bis 6c: Ausschnittsvergrößerungen des Bereichs e aus Fig. 4 in verschiedenen Ausführungsformen.

Gleiche Bauteile sind nachstehend mit gleichen Bezugszeichen gekennzeichnet.

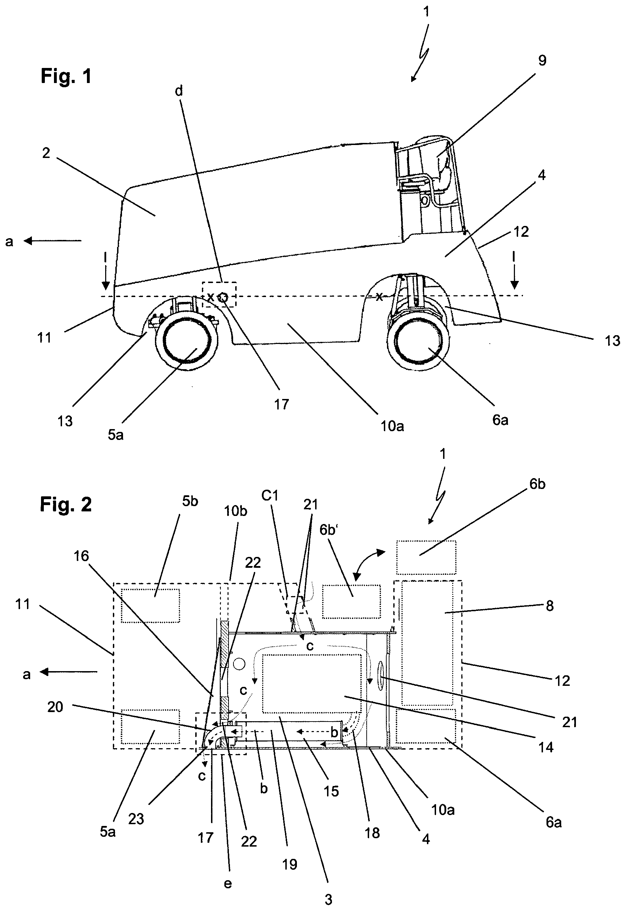

Die Straßenfräse 1 aus Fig. 1 ist eine Straßenfräse, konkret eine sogenannte Kompaktfräse. Figur 2 ist dabei ein Schnitt durch die Straßenfräse 1 aus Figur 1 entlang der Linie I-I, wobei die außerhalb der beiden Markierungen X auf der Linie I-I liegenden Bereiche und der neben dem Motorraum liegende Teil lediglich gestrichelt angedeutet sind. Die Straßenfräse 1 ist als selbstfahrende Einheit ausgebildet und weist dazu einen lediglich'in Fig. 2 angedeuteten Verbrennungsmotor 14 auf, der unterhalb einer Motorhaube 2 in einem Motorraum 3 angeordnet ist. Wesentliche Elemente der Straßenfräse 1 sind neben der Motorhaube 2 ein Maschinenrahmen 4, ein Vorderradpaar 5a (links) und 5b (rechts) und ein Hinterradpaar 6a (links) und 6b (rechts). Der Maschinenrahmen 4 umfasst die Elemente Seitenwand (Seitenwand 10a links und Seitenwand 10b rechts), Vorderwand 11 und Rückwand 12. Das Hinterrad 6b ist schwenkbar ausgebildet und kann von einer über die Seitenwand des Maschinenrahmens 4 vorstehenden Position (gemäß 6b) in eine eingeschwenkte Position 6b' verschwenkt werden. Dazu ist eine entsprechende Ausnehmung 7 im Maschinenrahmen 4 der Straßenfräse 1 zur Aufnahe des Hinterrades vorgesehen. Die weiteren Räder 5a, 5b und 6a sind jeweils in einem durch einen Radkasten gebildeten Freiraum angeordnet. Ein weiteres wesentliches Element der Straßenfräse 1 ist ein Bearbeitungswerkzeug, vorliegend konkret ein Fräsrotor 8, dessen Lage und Außenabmessungen in Fig. 2 skizziert sind. Im Arbeitsbetrieb der Straßenfräse 1 bewegt sich die Straßenfräse 1 bei in den zu bearbeitenden Boden abgesenktem Fräsrotor 8 in Arbeitsrichtung a. Die Straßenfräse 1 umfasst ferner einen über dem Fräsrotor 8 angeordneten Bedienarbeitsplatz 9, von dem aus ein Maschinenführer die Straßenfräse 1 steuern kann.

Die Besonderheit der Straßenfräse 1 liegt in der Ausbildung und Anordnung des Abgasstrangs 15. Der Abgasstrang 15 erstreckt sich vom Verbrennungsmotor 14 durch den Motorraum 3 in ein sich an den Motorraum 3 anschließendes und als Ableitraum 16 bezeichnetes Kompartiment im Maschineninneren bis hin zum Abgasauslass 17, über den die Abgase des Verbrennungsmotors 14 durch die Seitenwand 10a aus der Straßenfräse 1 ungefähr auf Kniehöhe austreten. Der Abgasstrang 15 weist dazu ein Verbindungselement 18 auf, welches den Verbrennungsmotor mit einem Schalldämpfer 19 und daran anschließend mit einem Krümmer 20 verbindet. Der Krümmer 20 weist einen Krümmungswinkel von 90° auf und lenkt das im Schalldämpfer 19 in Arbeitsrichtung A entlang strömende Abgas zur Seitenwand 10a der Straßenfräse 1 um. Die Strömungsverhältnisse des Abgases sind in Figur 2 mit den gestrichelten Pfeilen b angegeben. Im Ableitraum 16 wird die vom Verbrennungsmotor 14 weg strömende Motorluft gebündelt und kanalisiert und letztendlich zum im Querschnitt vergleichsweise klein ausgebildeten Motorluftauslass dirigiert, wodurch am Motorluftauslass 23 vergleichsweise hohe Strömungsgeschwindigkeiten erhalten werden, so dass besonders gute Durchmischungsergebnisse zwischen Abgas und Motorluft erhalten werden können.

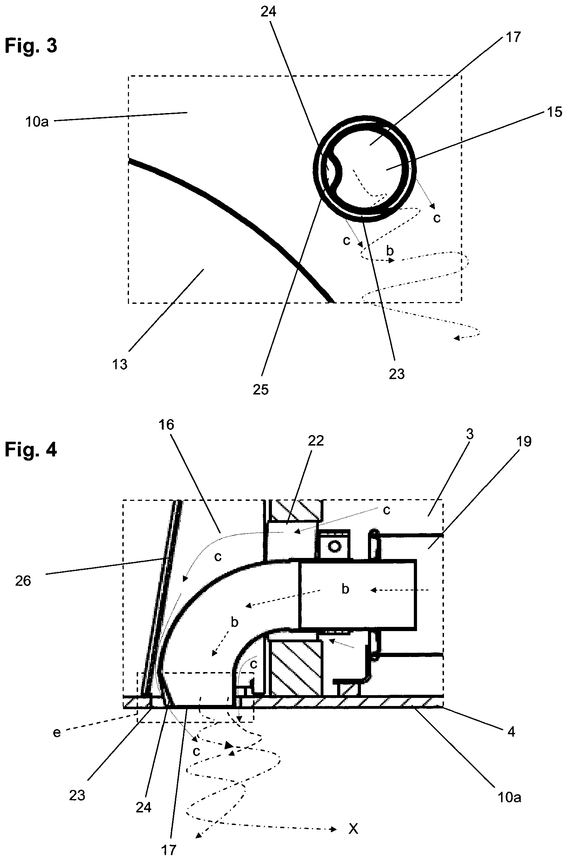

Unabhängig von der Abgasströmung gemäß den Pfeilen b erfolgt eine Durchströmung des Motorraums 3 mit Motorluft, deren Strömung mit den gepunkteten Pfeilen c in Figur 2 näher veranschaulicht ist. Die Motorluft strömt von außerhalb der Straßenfräse 1 über einen Motorlufteinlass 21 (in Figur 2 sind mehrere Alternativen des Motoreinlasses 21 angegeben, die ergänzend oder alternativ vorliegen können) in den Motorraum 3 ein, passiert den Verbrennungsmotor 14 zumindest teilweise und wird, nach einem Durchtritt über geeignete Verbindungsöffnungen 22 über den Ableitraum 16 durch den Motorluftauslass 23 aus der Straßenfräse 1 abgeleitet. Die Motorluft wird dabei im Bereich des Motorlufteinlasses über ein Kühlluftgebläse (in Fig. 2 schematisch mit C1 angegeben) angesaugt und in den Motorraum 3 eingeblasen, so dass im Motorraum gegenüber der Außenumgebung der Straßenfräse 1 ein Überdruck vorliegt. Die Motorluft entweicht aus dem Motorraum 3 über den Motorluftauslass 23, wobei die Motorluft dazu vom Motorraum 3 durch die Verbindungsöffnung 22 in den Ableitraum 16 und von da aus über den Motorluftauslass 23 aus der Straßenfräse heraus austritt. Der Strömungsweg vom Motorlufteinlass 21 zum Motorluftauslass 23 ist in den Figuren 2 und 4 mit den gepunkteten Pfeilen c angegeben.

Figur 3 zeigt den gestrichelt eingerahmten Abschnitt d aus Figur 1 in einer Ausschnittsvergrößerung und Figur 4 den in Figur 2 mit e bezeichneten Bereich. Insbesondere die beiden Ausschnittsvergrößerungen der Figuren 3 und 4 verdeutlichen die spezielle Relativpositionierung des Motorluftauslasses 23 im Verhältnis zum Abgasauslass 17. So ist der Abgasauslass 17 auf Höhe der Seitenwand 10a innerhalb des Motorluftauslasses 23 angeordnet beziehungsweise der Motorluftauslass 23 umgibt den Abgasauslass 17 ringförmig in der Austrittsebene von Motorluft und Abgas aus der Straßenfräse 1. Durch diese Anordnung strömen die Abgase quasi ringförmig beziehungsweise schlauchartig von Motorluft umspült aus der Straßenfräse 1 aus. Sowohl der Abgasauslass 17 als auch der von der Seitenwand 10a gebildete Motorluftauslass 23 schließen in Vertikalrichtung zueinander bündig mit der Außenoberfläche der Seitenwand 10a ab beziehungsweise sind überstandsfrei gegenüber der Seitenwand 10a. Dadurch, dass Abgas und Motorluft unmittelbar benachbart zueinander aus der Straßenfräse 1 herausgeführt werden, tritt eine rasche Vermischung von Abgas und Motorluft auf, wodurch die Abgase außerhalb der Straßenfräse 1 verdünnt und abgekühlt werden.

Vor dem Ausströmen des Abgases über den Abgasauslass 17 und dem Vermischen des Abgases mit der Motorluft aus dem Motorluftauslass 23 strömt die Motorluft insbesondere im Bereich des Ableitraums 16 an der Außenoberfläche des Abgasstrangs 15 bzw. konkret des Krümmers 20 entlang, wodurch bereits eine Vorabkühlung des Abgases in diesem Bereich des Krümmers 20 stattfindet. Der Krümmer 20 weist in der Horizontalebene eine 90° Krümmung auf und lenkt das anströmende Abgas von einer in Arbeitsrichtung a gerichteten Orientierung senkrecht zu einer seitlichen Orientierung um.

Der Ableitraum 16 schließt sich somit strömungstechnisch unmittelbar an den Motorraum 3 an und wird festgelegt durch eine Motorraumwand und ein Begrenzungsblech 26, welches den Raum zwischen der Verbindungsöffnung 22 und dem Motorluftauslass 23 nach außen und zum Maschineninneren abgrenzt, um eine definierte Führung der Motorluft vom Motorraum 3 zum Motorluftauslass 23 hin zu erreichen.

Ein zentrales Merkmal der Straßenfräse 1 liegt darin, dass aktiv eine Verwirbelung zwischen Abgas und Motorluft außerhalb der Straßenfräse 1 herbeigeführt wird. Dazu ist eine Verwirbelungseinrichtung 24 in Form einer in das Abgasrohr des Krümmers 20 eingeschlagenen Einwölbung 25 zum Inneren des Abgasrohres hin vorgesehen. Dies bewirkt eine Ablenkung der die Einkerbung 25 anströmenden Abgase von ihrer Anströmrichtung, was letztendlich eine Unterbrechung der bis zur Verwirbelungseinrichtung 24 nahezu laminaren Strömungseigenschaften der Abgase hin zu turbulenten Strömungseigenschaften zur Folge hat. Dadurch verlassen die Abgase den Abgasauslass 17 nicht mehr nahezu gradlinig und senkrecht von der Seitenwand 10a weg, sondern vielmehr turbulent und vermischen sich besonders gut mit der benachbart dazu über den Motorluftauslass 23 ausströmenden Motorluft. Die bis zum Abgasauslass 17 bis zu 300 °C heißen Abgase kühlen aufgrund der aktiven Vermischung mit der Motorluft nahezu unmittelbar neben der Seitenwand 10a auf einen für umstehende Personen ungefährlichen Temperaturbereich ab, so dass die seitliche Abgasführung keinerlei Beeinträchtigung für nah an der Straßenfräse 1 stehende Personen darstellt. In Fig. 4 ist dies durch den Wechsel der gepunkteten (Motorluft) und gestrichelten (Abgas) Pfeile b und c hin zu einer strichpunktierten Linie veranschaulicht.

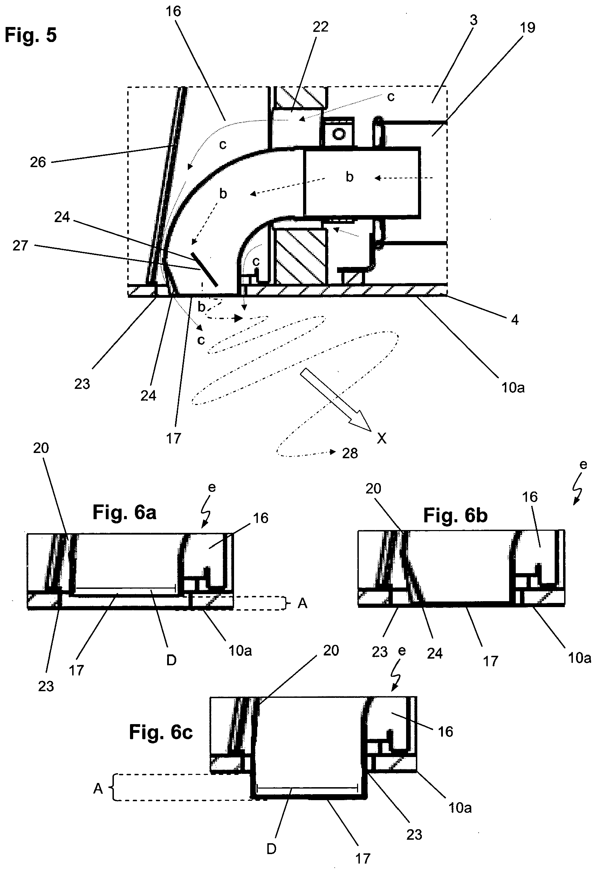

Figur 5 schließlich betrifft eine alternative Ausbildung der Verwirbelungseinrichtung 24. Ergänzend zu der Einkerbung 25, wie sie in Figur 4 bereits beschrieben ist, ist ein Leitblech 27 in den Strömungsbereich des Abgases innerhalb des Krümmers 20 angeordnet. Das Leitblech 27 ist schräg in den durch den Krümmer 20 gebildeten Strömungskanal eingesetzt. Durch das Leitblech 27 wird ein von der Seitenwand 10a weg gerichteter und um eine Achse umlaufender Abgaswirbel 28 erhalten, der neben der Vermischung mit Motorluft aus dem Motorluftauslass 23 gezielt von der Seitenwand 10a weg in Wirbelrichtung X gerichtet ist. Dadurch wird das Abgas- Motorluft- Gemisch gezielt von der Seitenwand 10a der Straßenfräse 1 weggeführt, so dass mit dieser Variante insbesondere auch Verrußungserscheinungen an der Seitenwand 10a besonders gut vorgebeugt werden kann.

Ergänzend oder alternativ ist es beispielsweise auch möglich, dass im Motorluftauslass 23 eine ergänzende oder auch nur im Motorluftauslass 23 eine einzelne Verwirbelungseinrichtung, beispielsweise ein Leitblech, angeordnet ist. Die treibende Kraft für die forcierte Verwirbelung von Abgas und Motorluft kann somit sowohl über eine Verwirbelungseinrichtung über den Abgasauslass 17 als auch ergänzend über den Motorluftauslass 23 erreicht werden.

Die Figuren 6a bis 6c verdeutlichen, was erfindungsgemäß von der Bezeichnung "im wesentlichen bündig" bezüglich des Abschlusses des Abgasauslasses 17 und der Außenoberfläche der Außenwand, konkret der Seitenwand 10a, umfasst ist. Wesentliche Bezugsgröße ist hier der Durchmesser D des Abgasrohres des Abgaskrümmers 20 im Bereich des Abgasauslasses 17.

In Fig. 6b, die exakt dem Auschnitt e aus Fig. 4 entspricht, schließen der Abgasauslass 17 und der Motorluftauslass 23 exakt bündig nach außen mit der Außenoberfläche der an den Motorluftauslass 23 angrenzenden Seitenwand 10a ab. Der Abgasauslass 17, der Motorluftauslass 23 und die Außenoberfläche der Seitenwand 10a liegen somit in einer gemeinsamen vertikalen Ebene.

Von der Erfindung mit umfasst ist es allerdings auch, wenn der Abgasauslass 17 und/oder der Motorluftauslass 23 in einem begrenzten Bereich, konkret innerhalb eines Bereichs bis maximal zu einem halben Durchmesser D des Abgasauslasses 17, gegenüber der Außenoberfläche der Seitenwand 10a zur Maschine hin rückversetzt sind oder nach außen vorstehen. Diese beiden Fälle sind in den Figuren 6a und 6c näher erläutert, wobei bei diesen Ausführungsformen die Verwirbelungseinrichtung 24 nicht vorhanden ist, auch wenn dies durchaus möglich und speziell auch für diese Ausführungsformen von der Erfindung mit umfasst ist. Der Durchmesser D ist dabei der Rohrdurchmesser das Abgaskrümmers 20 im Bereich des Abgasauslasses 17.

In Fig. 6a ist der Abgasauslass 17 um den Betrag A ins Maschineninnere gegenüber der Außenoberfläche der Seitenwand 10a rückversetzt. Der Versatz A ist dabei der Abstand zwischen dem Abgasauslass 17 und der Außenoberfläche der Seitenwand 10a senkrecht zur an den Abgasauslass 17 beziehungsweise den Motorluftauslass 23 angrenzenden Seitenwand 10a. Der Versatz A beträgt dabei maximal D/2.

Fig. 6c schließlich veranschaulicht die Situation, wenn der Abgasauslass 17 über die Außenoberfläche der an den Abgasauslass 17 beziehungsweise den Motorluftauslass 23 angrenzenden Seitenwand 10a nach außen vorsteht. Erfindungsgemäß mit umfasst ist dabei ein maximaler Überstand A von D/2. Auch hier bestimmt sich der Versatz A senkrecht zur an den Abgasauslass 17 beziehungsweise Motorluftauslass 23 angrenzenden Außenoberfläche der Seitenwand 10a.

## Patentansprüche

1. Straßenfräse (1) mit
- einem Verbrennungsmotor (14),
- einem Motorlufteinlass (21), über den die Motorluft von außen zum Verbrennungsmotor (14) hin strömt,
- einem Motorluftauslass (23), über den die Motorluft aus der Straßenfräse (1) heraus geleitet wird,
- einer Einrichtung (C1) zur Erzeugung einer Strömungsbewegung der Motorluft vom Motorlufteinlass (21) zum Motorluftauslass (23), und
- einem zur Abführung der im Betrieb des Verbrennungsmotors (14) entstehenden Abgase vom Verbrennungsmotor (17) aus der Straßenfräse (1) heraus ausgebildeten Abgasstrang (15) mit einem Abgasauslass (17),
wobei der Abgasstrang (15) in der Weise angeordnet ist, dass er wenigstens in seinem Endbereich (E) zumindest teilweise von der Motorluft umströmt wird, dass der Motorluftauslass (23) in einer Außenwand (10a, 10b, 11, 12), insbesondere einer Seitenwand (10a), der Straßenfräse (1) ausgebildet ist, und dass der Abgasauslass (17) im Wesentlichen bündig mit der Außenwand (10a, 10b, 11, 12), insbesondere mit der Seitenwand (10a), der Straßenfräse (1) abschließt, wobei der Abgasauslass (17) eine Verwirbelungseinrichtung (24, 25, 27) aufweist, die zur Verwirbelung des aus dem Abgasauslass (17) austretenden Abgases ausgebildet ist, wobei die Verwirbelungseinrichtung (24, 25, 27) ein in ein Rohr des Abgasstrangs (15) integriertes und vom Abgas angeströmtes Hindernis im Bereich des Abgasauslasses (17) des Rohres ist.

2. Straßenfräse (1) gemäß Anspruch 1,
**dadurch gekennzeichnet,**
**dass** ein sich an einen Motorraum (3) anschließender Ableitraum (16) vorhanden ist, durch den die Motorluft vom Verbrennungsmotor (14) kommend zum Motorluftauslass (23) strömt, und dass der Abgasstrang (15) mit einem Teilbereich, insbesondere mit einem Krümmer (20), durch den Ableitraum (16) hindurch geführt ist.

3. Straßenfräse (1) gemäß einem der vorhergehenden Ansprüche,
**dadurch gekennzeichnet,**
**dass** der Motorluftauslass (23) und der Abgasauslass (17) in der Weise zueinander angeordnet sind, dass eine Durchmischung des Abgases mit Motorluft, insbesondere beim Austritt aus der Straßenfräse (1); erfolgt.

4. Straßenfräse (1) gemäß einem der vorhergehenden Ansprüche
**dadurch gekennzeichnet,**
**dass** der Abgasauslass (17) vom Motorluftauslass (23) zumindest teilweise umgeben ist.

5. Straßenfräse (1) gemäß einem der vorhergehenden Ansprüche
**dadurch gekennzeichnet,**
**dass** der Motorluftauslass (23) eine Verwirbelungseinrichtung (24, 25, 27) aufweist, die zur Verwirbelung des aus dem Abgasauslass (17) austretenden Abgases ausgebildet ist.

6. Straßenfräse (1) gemäß einem der vorhergehenden Ansprüche
**dadurch gekennzeichnet,**
**dass** die Verwirbelungseinrichtung (24) ein in das Abgasrohr hinein gebogener Abschnitt (25), insbesondere Randabschnitt, des Abgasrohrs ist.

7. Straßenfräse (1) gemäß einem der vorhergehenden Ansprüche
dadurch **g**ekennzeichnet,
dass die Verwirbelungseinrichtung (24) in der Weise ausgebildet ist, dass sie die Abgasströmung in eine bevorzugte Richtung von der Straßenfräse (1) weg verwirbelt und insbesondere ein Leitblech (27) ist.

8. Straßenfräse (1) gemäß einem der vorhergehenden Ansprüche
**dadurch gekennzeichnet,**
**dass** zusätzlich zur Einrichtung (C1) zur Erzeugung einer Strömungsbewegung der Motorluft ein Zusatzgebläse vorhanden ist, mit dem Luft zum Motorluftauslass (23) gefördert wird.

9. Straßenfräse (1) gemäß einem der vorhergehenden Ansprüche
**dadurch gekennzeichnet,**
**dass** der Abgasauslass (17) und der Motorluftauslass (23) auf der der Nullseite (10b) gegenüberliegenden Seite (10a) der Straßenfräse angeordnet sind.

10. Verfahren zur Abgasführung bei einer Straßenfräse (1) gemäß einem der vorhergehenden Ansprüche, umfassend die Schritte
a) Ableiten des Abgases vom Verbrennungsmotor (14) zu einem Abgasauslass (17), welcher im Wesentlichen bündig mit einer Außenwand (10a, 10b, 11, 12), insbesondere mit einer Seitenwand (10a), der Straßenfräse (1) abschließt, und Führen der Motorluft zum Motorluftauslass (23);
b) Kühlen des Abgases mit Motorluft durch Durchmischen des Abgases mit Motorluft im Bereich des Abgasauslasses (17) und des Motorluftauslasses (23),
wobei das Durchmischen des Abgases mit der Motorluft durch ein Verwirbeln des Abgases mit einer im Abgasauslass (17) ausgebildeten Verwirbelungseinrichtung (24, 25, 27) erreicht wird.

11. Verfahren zur Abgasführung einer Straßenfräse (1) gemäß Anspruch 10,
**dadurch gekennzeichnet,**
**dass** das Verwirbeln außerhalb der Straßenfräse (1) erfolgt.

## Claims

1. A road milling machine (1) having
- an internal combustion engine (14),
- an engine air inlet (21), via which the engine air flows from the outside to the internal combustion engine (14),
- an engine air outlet (23), via which the engine air is conducted out of the road milling machine (1),
- a device (C1) for generating a flow movement of the engine air from the engine air inlet (21) to the engine air outlet (23), and
- an exhaust system (15), which is implemented for discharging the exhaust gases occurring during operation of the internal combustion engine (14) from the internal combustion engine (17) out of the road milling machine (1), having an exhaust gas outlet (17),
wherein the exhaust system (15) is arranged in such a manner that the engine air flows around it at least partially in its end region (E), the engine air outlet (23) is implemented in an outer wall (10a, 10b, 11, 12), in particular a side wall (10a), of the road milling machine (1), and the exhaust gas outlet (17) terminates essentially flush with the outer wall (10a, 10b, 11, 12), in particular with the side wall (10a) of the road milling machine (1), the exhaust gas outlet (17) having a swirling device (24, 25, 27), which is implemented to swirl the exhaust gas exiting from the exhaust gas outlet (17), the swirling device (24, 25, 27) being an obstruction which is integrated into a pipe of the exhaust system (15) and against which exhaust gas flows in the region of the exhaust gas outlet (17) of the pipe.

2. The road milling machine (1) according to claim 1,
**characterized in that** a discharge compartment (16) adjoining the engine compartment (3) is provided, through which the engine air coming from the internal combustion engine (14) flows to the engine air outlet (23), and a partial region of the exhaust system (15), in particular a manifold (20), is guided through the discharge compartment (16).

3. The road milling machine (1) according to any one of the preceding claims,
**characterized in that** the engine air outlet (23) and the exhaust gas outlet (17) are arranged in relation to one another in such a manner that thorough mixing of the exhaust gas with engine air occurs, in particular upon the exit from the road milling machine (1).

4. The road milling machine (1) according to any one of the preceding claims,
**characterized in that** the exhaust gas outlet (17) is at least partially enclosed by the engine air outlet (23).

5. The road milling machine (1) according to any one of the preceding claims,
**characterized in that** the engine air outlet (23) has a swirling device (24, 25, 27), which is implemented to swirl the exhaust gas exiting from the exhaust gas outlet (17).

6. The road milling machine (1) according to any one of the preceding claims,
**characterized in that** the swirling device (24) is a section (25), in particular an edge section, of the exhaust pipe which is bent into the exhaust pipe.

7. The road milling machine (1) according to any one of the preceding claims,
**characterized in that** the swirling device (24) is implemented in such a manner that it swirls the exhaust gas flow in a preferred direction away from the road milling machine (1) and is a baffle (27) in particular.

8. The road milling machine (1) according to any one of the preceding claims,
**characterized in that**, in addition to the device (C1) for generating a flow movement of the engine air, an auxiliary fan is provided, using which air is conveyed to the engine air outlet (23).

9. The road milling machine (1) according to any one of the preceding claims,
**characterized in that** the exhaust gas outlet (17) and the engine air outlet (23) are arranged on the side (10a) of the road milling machine opposite to the zero side (10b).

10. A method for exhaust gas guiding in a road milling machine (1) according to any one of the preceding claims, comprising the following steps
a) discharging the exhaust gas from the internal combustion engine (14) to the exhaust gas outlet (17), which terminates essentially flush with the outer wall (10a, 10b, 11, 12), in particular with the side wall (10a) of the road milling machine (1), and guiding the engine air to the engine air outlet (23);
b) cooling the exhaust gas using engine air by thoroughly mixing the exhaust gas with engine air in the region of the exhaust gas outlet (17) and the engine air outlet (23), the thorough mixing of the exhaust gas with the engine air being achieved by swirling the exhaust gas using a swirling device (24, 25, 27) implemented in the exhaust gas outlet (17).

11. The method for exhaust gas guiding in a road milling machine (1) according to claim 10,
**characterized in that** the swirling occurs outside the road milling machine (1).

## Revendications

1. Engin (1) de fraisage de chaussée comprenant :
- un moteur (14) à combustion interne,
- une entrée d'air (21) pour le moteur, par laquelle l'air destiné au moteur s'écoule de l'extérieur jusqu'au moteur à combustion interne (14),
- une sortie (23) d'air du moteur, par laquelle l'air dans le moteur est conduit hors de l'engin (1) de fraisage de chaussée,
- un dispositif (C1) destiné à créer un mouvement d'écoulement de l'air du moteur, de l'entrée (21) d'air pour le moteur jusqu'à la sortie (23) d'air du moteur, et
- un système d'échappement (15), qui est mis en oeuvre pour évacuer les gaz d'échappement émis pendant le fonctionnement du moteur (14) à combustion interne du moteur (14) à combustion interne, ceci hors de l'engin (1) de fraisage de chaussée, le système ayant une sortie (17) pour le gaz d'échappement,
dans lequel le système d'échappement (15) est agencé de telle manière que l'air du moteur s'écoule autour de lui au moins partiellement dans sa portion d'extrémité (E), la sortie (23) d'air du moteur est mise en oeuvre dans une paroi extérieure (10a, 10b, 11, 12), en particulier une paroi latérale (10a), de l'engin (1) de fraisage de chaussée, et la sortie (17) pour le gaz d'échappement aboutit de manière essentiellement affleurante avec la paroi extérieure (10a, 10b, 11, 12), en particulier avec la paroi latérale (10a) de l'engin (1) de fraisage de chaussée, la sortie (17) pour le gaz d'échappement ayant un dispositif (24, 25, 27) générant un tourbillonnement, qui est mis en oeuvre pour faire tourbillonner le gaz d'échappement sortant de la sortie (17) pour le gaz d'échappement, le dispositif (24, 25, 27) générateur d'un tourbillonnement constituant un obstacle qui est intégré dans un tuyau du système d'échappement (15) et contre lequel le gaz d'échappement s'écoule dans la zone de la sortie (17) pour le gaz d'échappement du tuyau.

2. Engin (1) de fraisage de chaussée selon la revendication 1,
**caractérisé en ce qu'**un compartiment (16) d'évacuation adjacent au compartiment moteur (3) est présent, par lequel l'air provenant du moteur (14) à combustion interne s'écoule vers la sortie (23) d'air du moteur, et une zone partielle du système d'échappement (15), en particulier un collecteur (20), est guidée à travers le compartiment (16) d'évacuation.

3. Engin (1) de fraisage de chaussée selon l'une quelconque des revendications précédentes,
**caractérisé en ce que** la sortie (23) d'air du moteur et la sortie (17) pour le gaz d'échappement sont disposées l'une par rapport à l'autre d'une manière telle qu'un mélange poussé du gaz d'échappement avec l'air du moteur se produit, en particulier au moment de la sortie de l'engin (1) de fraisage de chaussée.

4. Engin (1) de fraisage de chaussée selon l'une quelconque des revendications précédentes,
**caractérisé en ce que** la sortie (17) pour le gaz d'échappement est au moins partiellement entourée par la sortie (23) d'air du moteur.

5. Engin (1) de fraisage de chaussée selon l'une quelconque des revendications précédentes,
**caractérisé en ce que** la sortie (23) d'air du moteur comprend un dispositif (24, 25, 27) générant un tourbillonnement qui est mis en oeuvre pour faire tourbillonner le gaz d'échappement sortant de la sortie (17) pour le gaz d'échappement.

6. Engin (1) de fraisage de chaussée selon l'une quelconque des revendications précédentes,
**caractérisé en ce que** le dispositif (24) générant un tourbillonnement est une section (25), en particulier une section de bordure, du tuyau d'échappement qui est recourbée dans le tuyau d'échappement.

7. Engin (1) de fraisage de chaussée selon l'une quelconque des revendications précédentes,
**caractérisé en ce que** le dispositif (24) générant un tourbillonnement est mis en oeuvre d'une manière telle qu'il fasse tourbillonner le flux du gaz d'échappement dans une direction préférée s'écartant de l'engin (1) de fraisage de chaussée, et en particulier est un déflecteur (27).

8. Engin (1) de fraisage de chaussée selon l'une quelconque des revendications précédentes,
**caractérisé en ce que**, outre le dispositif (C1) destiné à créer un mouvement d'écoulement de l'air du moteur, un ventilateur auxiliaire est présent, par l'utilisation duquel l'air est transporté vers la sortie (23) d'air du moteur.

9. Engin (1) de fraisage de chaussée selon l'une quelconque des revendications précédentes,
**caractérisé en ce que** la sortie (17) du gaz d'échappement et la sortie (23) d'air du moteur sont disposées sur le côté (10a) de l'engin de fraisage de chaussée opposé au côté zéro (10b).

10. Procédé pour le guidage du gaz d'échappement dans un engin (1) de fraisage de chaussée selon l'une quelconque des revendications précédentes, comprenant les étapes suivantes :
a) évacuation du gaz d'échappement depuis le moteur (14) à combustion interne jusqu'à la sortie (17) pour le gaz d'échappement, qui aboutit de manière essentiellement affleurante avec la paroi extérieure (10a, 10b, 11, 12), en particulier avec la paroi latérale (10a) de l'engin (1) de fraisage de chaussée, et guidage de l'air du moteur jusqu'à la sortie (23) pour l'air du moteur ;
b) refroidissement du gaz d'échappement en utilisant l'air du moteur, par un mélange poussé du gaz d'échappement avec l'air du moteur dans la zone de la sortie (17) pour le gaz d'échappement et la sortie (23) d'air du moteur, le mélange poussé du gaz d'échappement avec l'air du moteur étant réalisé en faisant tourbillonner le gaz d'échappement en utilisant un dispositif (24, 25, 27) générant un tourbillonnement mis en oeuvre dans la sortie (17) pour le gaz d'échappement.

11. Procédé pour le guidage du gaz d'échappement dans un engin (1) de fraisage de chaussée selon la revendication 10,
**caractérisé en ce que** le tourbillonnement se produit à l'extérieur de l'engin (1) de fraisage de chaussée.
